# FASCICULE DE BREVET EUROPEEN

(11) **EP 2 500 236 B1**
(45) Date de publication et mention de la délivrance du brevet: **20.11.2013**
(21) Numéro de dépôt: 11305274.0
(22) Date de dépôt: 14.03.2011
(51) Int. Cl.: B62B 1/20

(54) **Brouette renforcée équipée d'une pièce intermédiaire de maintien, de support et de renfort**
Verstärkte Schubkarre, die mit einem Mittelteil zur Stütze, Halterung und Verstärkung ausgestattet ist
Reinforced wheelbarrow provided with an intermediate support, stand and reinforcement part

(43) Date de publication de la demande: 19.09.2012
(73) Titulaire: CDH Group, 27610 ROMILLY SUR ANDELLE (FR)
(72) Inventeur: Schmitt, Thibaut, 68590, Rorschwihr (FR); Devynck, Gabriel, 67206, Mittelhausbergen (FR)
(74) Mandataire: Nuss, Pierre

(56) Documents cités:
- EP-A2- 1 988 001
- WO-A1-03/000531
- FR-A- 1 313 595
- FR-A1- 2 566 356
- GB-A- 2 331 048

## Description

La présente invention concerne le domaine des véhicules de manutention, notamment du type brouette ou analogue, et a pour objet une brouette ou analogue renforcée équipée d'une pièce intermédiaire de maintien, de support et de renfort.

On sait qu'une brouette comprend généralement un moyen porte-charge monté sur une roue ou autre système roulant par l'intermédiaire d'un châssis constitué par deux brancards se terminant à l'arrière de la brouette par des poignées de préhension et au moins un pied généralement intégré dans le châssis, assurant la stabilité de la brouette en situation statique.

Le moyen porte-charge se présente généralement sous la forme d'un bac, connu usuellement sous le nom de caisse, comportant un fond sensiblement carré ou rectangulaire entouré de quatre parois opposées deux à deux, à savoir : deux parois latérales opposées et deux parois respectivement avant et arrière opposées, la paroi arrière étant située, à l'état monté de la caisse sur le châssis, du côté des poignées. Par ailleurs, certaines caisses ne comportent pas de paroi arrière.

On connaît également des moyens porte-charge comportant uniquement un fond et une paroi avant généralement inclinée vers l'avant en formant un angle obtus avec le fond pour faciliter le déchargement.

Lors du transport d'une charge, le poids de celle-ci exerce un effort sur le fond de la caisse pouvant engendrer une déformation dudit fond. De même, lors du déchargement, un effort est exercé sur la paroi avant de la brouette pouvant entraîner une déformation de cette dernière.

De plus, les brouettes sont souvent expédiées montées et sont empilées les unes sur les autres sur des palettes en position retournée. La caisse de la première brouette de la pile est alors en contact avec la palette et doit, pour ne pas être déformée, à la fois résister à la charge de toutes les brouettes et aux chocs subis lors du transport.

Actuellement, pour empêcher ces déformations, les brouettes sont généralement équipées de deux traverses, une à l'avant, une à l'arrière, qui sont soudées ou boulonnées au châssis, chaque traverse s'étendant sensiblement parallèlement au fond de la caisse. Elles sont également équipées de deux jambes de support de caisse fixées chacune par l'une de ses extrémités en un point de fixation de la face avant de la caisse et par l'autre extrémité en un point de fixation du châssis, chaque s'étendant sensiblement perpendiculairement au fond de la caisse, ce pour permettre un renfort local.

Toutefois, ces différentes et nombreuses pièces de maintien et de renfort impliquent un coût supplémentaire important dû à leur fabrication et à leur montage.

De plus, le renforcement de la caisse n'est pas uniforme mais seulement localisé, entraînant alors des déformations notamment sur la face avant du moyen porte-charge malgré ces pièces de renfort.

En outre, ces pièces de renfort, traverses ou jambes, ont tendance à se plier sous l'effort de la charge diminuant d'autant leur résistance ainsi que celle de la caisse.

Par ailleurs, le châssis et les pièces rapportées de support des brouettes standards maintiennent principalement la caisse dans sa périphérie et ne permettent pas un renfort suffisant du fond qui a tendance à se déformer fréquemment.

Pour empêcher la déformation du fond de la caisse, il a été prévu, dans certaines brouettes d'ajouter, entre la caisse et les pièces ou traverses de renfort, une plaque de tôle recouvrant la face externe du fond de ladite caisse. Cependant ce type plaque implique des coûts supplémentaires en particulier au niveau de la fabrication, du montage, et du stockage.

Le document EP 1 988 001 A2 a pour objet une brouette empilable comprenant un ensemble de caisse et de brancards et un ensemble de pieds et de paliers de roue. Les pieds comportent une traverse formant un moyen d'assemblage coopérant avec une languette élastique fixée sous l'avant de la caisse et des crochets introduits dans les ouvertures d'une autre traverse fixée contre la paroi inférieure arrière de la caisse entre les deux brancards. Les brancards et les pieds sont constitués par une structure tubulaire. Les brancards comportent une partie tubulaire en forme de V appliquée contre la face avant et une partie tubulaire formée de deux tubes sensiblement parallèles se prolongeant par les poignées et venant en contact avec les côtés latéraux, perpendiculaires aux côtés avant de la brouette, de la face externe du fond de la caisse.

Toutefois la brouette du document EP 1 988 001 A2 nécessite un nombre important de pièces pour réaliser l'assemblage de la caisse sur le châssis (ensemble pieds et paliers de roue), ce qui renchérit d'autant les coûts de fabrication et de montage de la brouette. Par ailleurs, le fond de la caisse n'est pas suffisamment renforcé de sorte que des déformations de ce dernier se produisent fréquemment lors de l'empilement des brouettes ou de leur transport.

Le document FR 1 313 595 A concerne un châssis tubulaire démontable de brouette qui se compose essentiellement de deux tubes constituant les brancards de la brouette et dans les extrémités intérieures desquels s'emboîte l'élément tubulaire formant support de la caisse et présentant une forme de boucle allongée relevée vers l'avant de la caisse contre laquelle elle vient en appui. En outre, l'assemblage entre le châssis et la caisse est réalisé par l'intermédiaire de l'ensemble élément tubulaire, tubes et au moyen d'une traverse en fer plat permettant de solidariser la caisse avec lesdits tubes qui comportent à cet effet des plaquettes de tôle soudées sur ces derniers. Les deux tubes s'étendent sous le fond de la caisse, à distance dudit fond et en étant écartés l'un de l'autre de part d'autre de la zone centrale du fond et à distance de cette dernière.

Toutefois, avec une brouette du type de celle du document FR 1 313 595 A, l'assemblage entre la caisse et le châssis est réalisée par une pluralité de pièces intermédiaires (deux tubes, une traverse et des plaquettes) qui augmentent d'autant les coûts de fabrication et de montage de ladite brouette. En outre, les parties emboîtables l'une dans l'autre de la structure intermédiaire tubulaire (boucle relevée, tubes) affaiblissent d'autant la rigidité de la brouette et ne permettent pas, avec la traverse, formant une ligne de contact transversale unique entre les tubes et le fond de la brouette, d'assurer un renfort suffisant et efficace évitant la déformation du fond de la caisse, notamment de sa zone centrale, plus particulièrement lors de l'empilement des brouettes ou de leur transport.

Le document WO 03/000531 A1 a pour objet une brouette comportant une caisse fixée à un sous-châssis tubulaire présentant la forme d'un U dont les deux extrémités libres sont reliées entre elles par un élément transversal fixés sensiblement le long du côté arrière de la face externe du fond de la caisse.

Cependant, la brouette objet de ce document WO 03/000531 A1 nécessite la fabrication et le montage d'un élément transversal pour réaliser l'assemblage du sous-châssis à la caisse. En outre, la forme en U du sous-châssis et sa fixation et son contact sur la face externe du fond de la caisse, au moyen de l'élément transversal qui forme une ligne de contact unique et transversale le long du côté arrière dudit fond, ne permettent pas un contact suffisant sur la face externe dudit fond empêchant sa déformation, notamment dans sa zone centrale, plus particulièrement lors de l'empilement des brouettes ou de leur transport.

Le document GB 2 331 048 A concerne une brouette comportant un châssis, une caisse et une plate-forme en tôle mince située entre ces derniers et comprenant une base rectangulaire en contact avec le fond de la caisse et une partie relevée en contact avec la face avant de la caisse.

Toutefois, la plateforme du document GB 2 331 048 A qui soutient le fond de la caisse de manière uniforme ne permet pas de renforcer efficacement le fond, notamment dans sa zone centrale la plus sujette aux contraintes, de sorte que l'on constate fréquemment des déformations du fond de la caisse, notamment dans sa zone centrale, plus particulièrement lors de l'empilement des brouettes.

Le document FR 2 566 356 A1 concerne une brouette basculante comportant un châssis, une benne et un berceau à claire voie en tubes ou profilés composé d'un cadre rectangulaire central et de deux parties inclinées avant et arrière. Le berceau s'étend entre le châssis et la face externe inférieure de la benne, le cadre rectangulaire étant en contact avec la face externe du fond de ladite benne. Les tubes s'étendent essentiellement le long des arêtes de la benne délimitant ses côtés sensiblement plans. Le berceau est prévu de préférence pour comporter des charnières permettant son articulation sur le châssis.

Toutefois, le cadre du berceau de la brouette du document FR 2 566 356 A1, qui assure un renfort de la benne au niveau de ses arêtes (zones les plus rigides et robustes), ne permet pas d'obtenir un renfort efficace des zones les plus fragiles du fond de la caisse, notamment de sa zone centrale, plus particulièrement lors de l'empilement des brouettes ou de leur transport. En outre la structure du berceau constituée d'un assemblage de tubes longitudinaux et transversaux, le cas échéant avec des charnières d'articulation, ne permet pas d'obtenir un coût de fabrication réduit.

La présente invention a pour but de pallier les inconvénients mentionnés ci-dessus en proposant une brouette renforcée équipée d'une pièce intermédiaire de maintien, de support et de renfort permettant d'éviter ou, du moins, limiter fortement la déformation, notamment, de la face avant et du fond du moyen porte-charge de la brouette, en particulier lors de l'empilement de plusieurs brouettes montées, ainsi que lors du transport de la charge et de son déchargement, ce, sans pour autant renchérir le coût de revient par une mise en oeuvre aisée et rapide.

A cet effet, la présente invention a pour objet une brouette ou analogue renforcée, qui comprend un moyen porte-charge, plus particulièrement du type caisse, comportant, au moins, un fond et une paroi avant et étant monté sur un système roulant par l'intermédiaire d'un châssis, permettant de supporter le moyen porte-charge avec maintien, au moins un moyen d'appui pour assurer la stabilité de la brouette en situation statique, et des moyens de préhension du type poignées associées à des brancards, se caractérise en ce que le moyen porte-charge est monté et fixé sur ledit châssis essentiellement au moyen d'une pièce intermédiaire constituée par au moins deux parties s'étendant successivement, à l'état monté, suivant l'axe longitudinal de la brouette, à savoir une première partie venant en contact avec la face externe de la paroi avant ou face avant et une seconde partie venant en contact avec la face externe du fond, l'une et/ou l'autre desdites première et seconde parties étant fixées, par au moins un point de fixation, sur ledit châssis, en ce que ladite pièce intermédiaire est une pièce rigide de maintien, de support et de renfort réalisée en une seule pièce à partir d'un tube rigide, ou autre élément allongé et rigide, cintré en plusieurs points, en contact, d'une part, avec la face avant suivant une ligne de contact globalement en forme d'arceau, de U ou de V, et d'autre part, avec la face externe du fond, en étant fixé sur ce dernier par au moins un point de fixation, suivant deux lignes de contacts, formant globalement un X, épousant sensiblement les diagonales de la face externe dudit fond, ladite pièce intermédiaire comportant alors au moins deux plans de ligne(s) de contact, à savoir un premier plan formant la première partie venant en contact avec la face avant et un second plan formant la seconde partie venant en contact avec la face externe du fond et en ce que lesdits premier et second plans sont inclinés l'un par rapport à l'autre d'un angle (α) sensiblement égal à l'angle d'inclinaison entre la paroi avant et le fond.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 représente une vue de côté de la brouette selon la présente invention, dans un mode de réalisation préférentiel et dans un premier mode de réalisation de la pièce intermédiaire,
- la figure 2 est une vue de dessous de la pièce intermédiaire de la brouette représentée sur la figure 1,
- la figure 3 est une vue de côté de la pièce intermédiaire de la brouette représentée sur la figure 1,
- la figure 4 est une vue isométrique de l'assemblage de la pièce intermédiaire sur le châssis de la brouette représentée sur la figure 1,
- la figure 5 représente une vue de dessous de la brouette représentée sur la figure 1,
- la figure 6 est une vue de dessus de l'assemblage du châssis de la brouette avec la pièce intermédiaire représentée sur la figure 1
- la figure 7 est une vue de côté de la brouette selon un autre mode de réalisation possible du châssis de la brouette de l'invention comportant une partie de châssis venant en contact de la face arrière de la caisse,
- la figure 8A est une vue de côté de la brouette selon l'invention, dans un deuxième mode de réalisation de la pièce intermédiaire,
- la figure 8B est une vue en perspective de la pièce intermédiaire représentée sur la figure 8A,
- la figure 9A est une vue de côté de la brouette selon l'invention, dans un troisième mode de réalisation de la pièce intermédiaire, et
- la figure 9B est une vue en perspective de la pièce intermédiaire représentée sur la figure 9A,

Les figures montrent une brouette renforcée comprenant un moyen porte-charge 1, plus particulièrement du type caisse, comportant, au moins, un fond 7 et une paroi avant 9 et étant monté sur un système roulant 2 par l'intermédiaire d'un châssis 3, permettant de supporter le moyen porte-charge 1 avec maintien, au moins un moyen d'appui 5 pour assurer la stabilité de la brouette en situation statique, et des moyens de préhension 4, 6 du type poignées 6 associées à des brancards 4.

Conformément à la présente invention, le moyen porte charge 1 est monté et fixé sur ledit châssis 3 essentiellement au moyen d'une pièce intermédiaire 8 rigide de maintien, de support et de renfort.

La paroi avant 9 peut être, plus particulièrement, inclinée en faisant un angle obtus avec ledit fond 7.

Toujours conformément à la présente invention, la pièce intermédiaire 8 est constituée par au moins deux parties s'étendant successivement, à l'état monté, suivant l'axe longitudinal de la brouette, à savoir une première partie venant en contact avec la face externe de la paroi avant 9 ou face avant 9', le cas échéant en étant fixée sur cette dernière par au moins un point de fixation, et une seconde partie venant en contact avec la face externe du fond 7, le cas échéant en étant fixée sur cette dernière par au moins un point de fixation. L'une et/ou l'autre desdites première et seconde parties pouvant être fixées, par au moins un point de fixation, sur le châssis 3.

Préférentiellement, un point de fixation selon la présente invention peut consister, par exemple, en un point de fixation par vissage, soudage, rivetage, clinchage ou collage. Un point de fixation par soudage peut être, par exemple, un point de soudage, un cordon de soudage ou un soudage par résistance.

On entendra, selon la présente invention, en tant que moyen porte-charge 1 destiné à contenir et à supporter une charge à transporter, une structure du type comprenant essentiellement un fond 7 et une paroi avant 9 et pouvant comprendre en outre, une paroi arrière 17 comportant une face externe ou face arrière 17'. Une telle structure, notamment dans le cas d'un moyen porte-charge 1 du type bac ou caisse, peut comprendre en outre des parois latérales ou flancs 18 entourant et surmontant, avec la face avant 9' et, le cas échéant, la paroi arrière 18, le fond 7.

On entendra par face arrière 17' du moyen porte-charge 1 la partie extérieure de la caisse située à l'opposé de la face avant 9', c'est-à-dire du côté où sont positionnés les poignées 6 et l'utilisateur.

Selon l'invention, la pièce intermédiaire 8 consiste en une pièce intermédiaire tubulaire réalisée à partir d'un élément tubulaire rigide cintré en un ou plusieurs points, ledit élément tubulaire étant réalisé en une seule pièce à partir d'un tube rigide, ou autre élément allongé et rigide plein ou creux, cintrés en un ou plusieurs points.

La forme tubulaire de la pièce intermédiaire 8 permet d'alléger l'ensemble de la brouette de sorte que cette dernière soit, notamment, plus facilement maniable.

Une telle pièce intermédiaire tubulaire comporte alors au moins deux plans de ligne(s) de contact, à savoir un premier plan formant la première partie venant en contact avec la face avant 9' et un second plan formant la seconde partie venant en contact avec la face externe du fond 7, lesdits premier et second plans pouvant être inclinés l'un par rapport à l'autre d'un angle (α) sensiblement égal à l'angle d'inclinaison entre la paroi avant 9 et le fond 7 du moyen porte-charge 1.

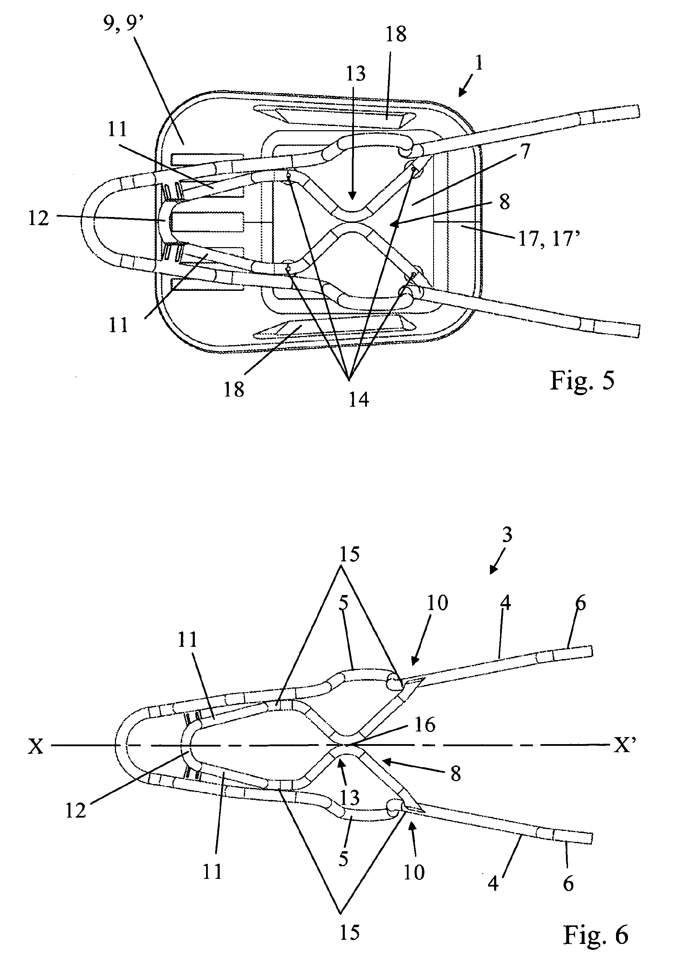

La pièce intermédiaire 8 tubulaire est en contact, d'une part, avec la face avant 9' suivant une ligne de contact globalement en forme d'arceau, de U ou de V, d'autre part avec la face externe du fond 7 suivant deux lignes de contacts, formant globalement un X, épousant sensiblement les diagonales de la face externe dudit fond 7 (notamment figure 5).

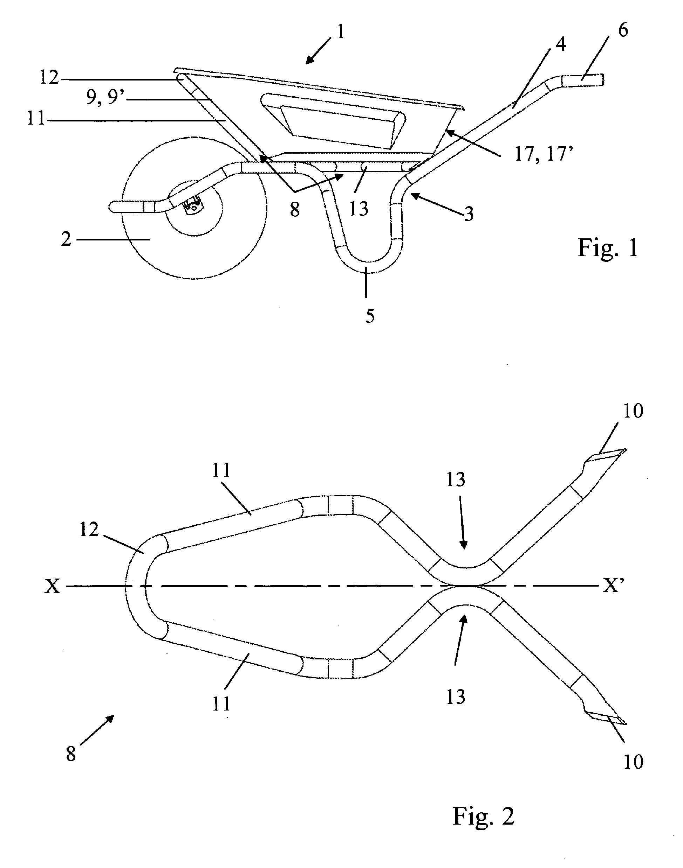

La pièce intermédiaire 8 tubulaire peut être cintrée symétriquement par rapport à un axe médian longitudinal X-X' et, d'une part, le premier plan peut être un plan de cintrage comprenant deux portions droites 11, sensiblement parallèles ou inclinées l'une par rapport à l'autre, reliées entre elles à l'une de leurs extrémités par une portion courbe 12 et, d'autre part, le second plan peut être un plan de cintrage comprenant deux portions cintrées 13 prolongeant chacune l'une desdites portions droites 11 du premier plan et comportant chacune une succession de cintrages, symétriquement l'une par rapport à l'autre portion, à savoir un cintrage définissant l'angle d'inclinaison α entre le second plan de cintrage et le premier plan de cintrage, et deux cintrages ayant pour effet que les deux portions cintrées 13 symétriques forment ensemble le X et se rejoignent au centre de ce dernier, de préférence en étant fixées l'une avec l'autre, comme le montrent les figures 2, 4, 5, 6, 8B et 9B.

La pièce intermédiaire 8, ainsi fixée en son centre au niveau de la jonction entre les deux portions cintrées 13, est figée et permet d'obtenir un ensemble plus rigide, comme le montrent les figures 2 et 4 à 9B.

Ainsi, la pièce intermédiaire 8 qui vient en contact avec la face avant 9' suivant une ligne de contact, s'étendant globalement en forme d'arceau, de U ou de V, permet un maintien uniforme et réparti sur la face avant 9' du moyen de porte-charge 1, évitant toute déformation de cette dernière sous la contrainte d'une charge, notamment en position inclinée de la brouette vers l'avant comme il est représenté aux figures 1, 5, 7, 8A et 9A.

Avec ce type de configuration en X de la seconde partie de la pièce intermédiaire 8, comme on peut le voir notamment sur la figure 5, on opère une économie de matière importante, puisque la pièce intermédiaire 8 ne couvre que les diagonales du fond 7, tout en conservant ses fonctions de renfort, support et maintien du moyen porte-charge 1.

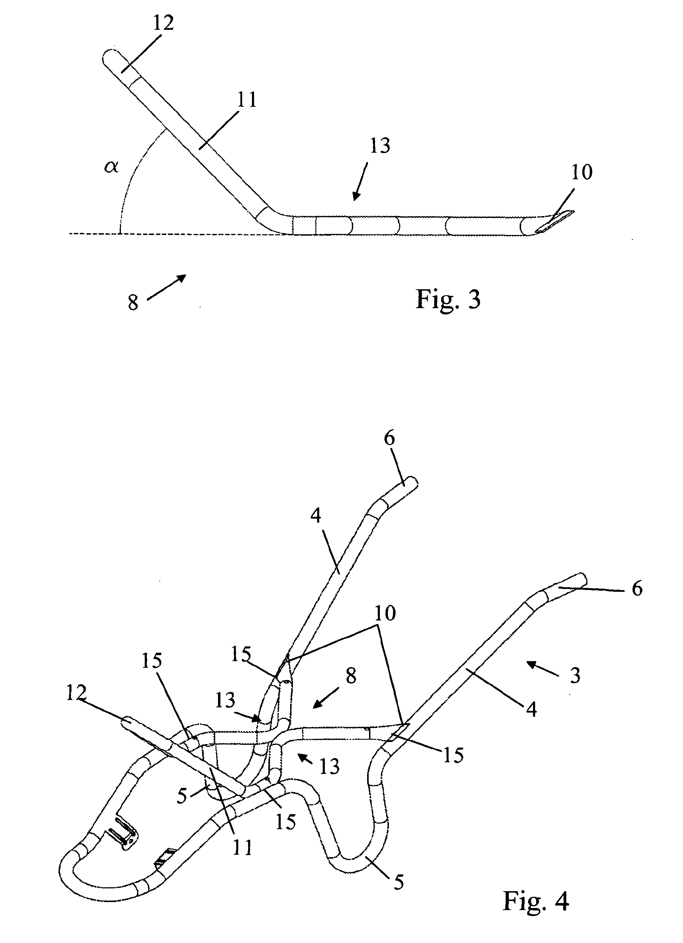

En outre, la seconde partie de la pièce intermédiaire 8 tubulaire peut se terminer par deux extrémités libres 10 tubulaires (figure 2, 3, 4 et 6) et ces dernières peuvent être écrasées ou aplaties et, préférentiellement, biseautées, ce pour permettre l'accostage avec le châssis 3 (figures 4, 5 et 6).

En accord avec le mode de réalisation préféré de la présente invention, le second plan de cintrage en forme de X peut être fixé, d'une part, sur la face externe du fond 7 par un premier ensemble de fixation 14 qui peut être composé d'au moins quatre points de fixation, dont quatre points sont situés chacun sensiblement au niveau de l'une des extrémités du X (figure 5) et, d'autre part, sur le châssis 3 par un second ensemble de fixation 15 qui peut être composé d'au moins quatre points de fixation, dont quatre points peuvent être situés avantageusement à proximité desdits premiers points de fixation (figure 6).

De préférence, la présente invention peut prévoir que la première partie de la pièce intermédiaire 8 soit uniquement en contact de maintien et de renfort avec la face avant 9' du moyen porte-charge 1 sans fixation avec cette dernière. Dans ce cas, au moins, la seconde partie peut être fixée sur le fond 7 du moyen porte-charge 1.

La pièce intermédiaire 8, grâce à sa première partie, permet de maintenir et de renforcer le moyen porte-charge 1 à l'avant de manière uniforme, et, grâce à sa seconde partie, de renforcer et supporter le fond 7 du moyen porte-charge 1.

Une telle pièce intermédiaire 8 selon la présente invention qui permet ainsi de supporter, de maintenir et de renforcer le moyen porte-charge 1, peut également, avantageusement, avoir comme effet de renforcer et/ou rigidifier le châssis 3.

Par ailleurs, l'unicité de la pièce intermédiaire 8, réalisée en une seule pièce permet de diminuer substantiellement le nombre de pièces de maintien et de renfort à monter sur la brouette et le nombre de moyens de fixation utilisés dans les brouettes actuelles et de réduire les temps de montage et par conséquent les coûts de fabrication de la brouette.

De préférence, le châssis 3 peut consister en un châssis 3 tubulaire réalisé à partir d'un élément tubulaire rigide cintré en plusieurs points, ledit élément tubulaire pouvant être réalisé soit en une seule pièce à partir d'un tube rigide, ou autre élément allongé et rigide plein ou creux, soit à partir d'un assemblage de plusieurs tubes rigides, ou autres éléments allongés et rigides pleins ou creux. La forme tubulaire du châssis 3 permet d'alléger encore l'ensemble de la brouette.

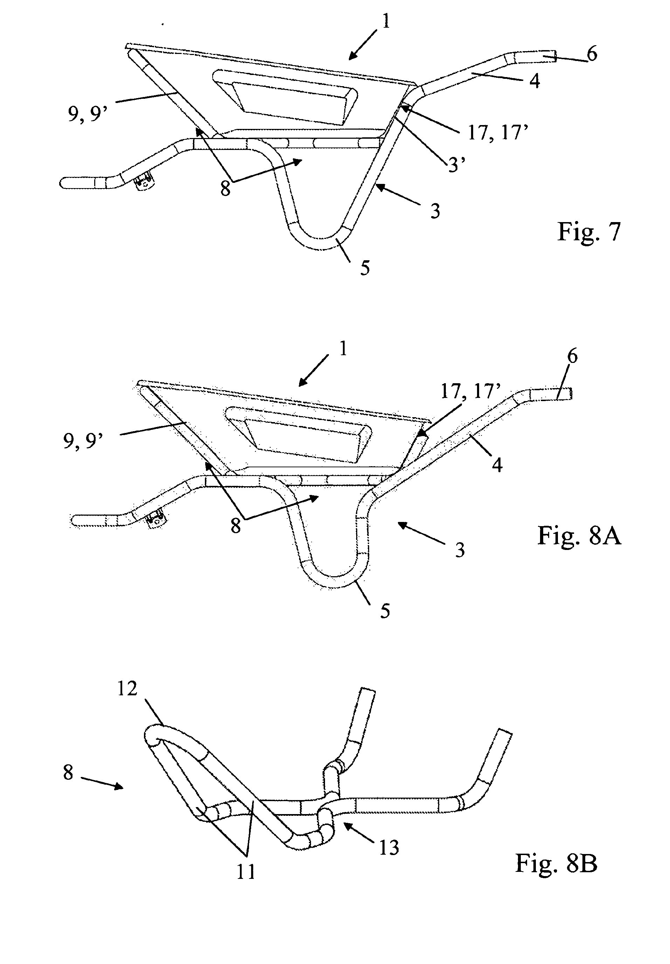

Dans le cas où le moyen porte-charge 1 est du type bac ou caisse comprenant au moins un fond 7, une face avant 9' et une face arrière 17', la présente invention peut prévoir que cette dernière soit fixée directement sur le châssis 3 qui comporte à cet effet une partie de châssis 3' venant en contact avec ladite face arrière 17', le cas échéant en étant fixée sur cette dernière par au moins un point de fixation (figure 7).

Toujours dans le cas où le moyen porte-charge 1 comprend au moins un fond 7, une face avant 9' et une face arrière 17', dans un deuxième mode de réalisation de la pièce intermédiaire 8, représenté sur les figures 8A et 8B, la présente invention peut prévoir que la seconde partie de la pièce intermédiaire 8 se prolonge, côté opposé à la première partie, vers l'arrière de ladite brouette, par une troisième partie venant en contact avec ladite face arrière 17', le cas échéant en étant fixée sur cette dernière par au moins un point de fixation. Ladite troisième partie peut alors former, le cas échéant, un troisième plan de cintrage incliné par rapport au second plan de cintrage d'un angle sensiblement identique à l'angle entre le fond 7 et la face arrière 17' dudit moyen-porte charge 1.

Si on se réfère à la figure 8B, on peut voir qu'une telle troisième partie peut, par exemple et préférentiellement, être constituée par deux branches prolongeant chacune, dans une forme plus particulièrement en X de la seconde partie, l'une des extrémités libres dudit X.

Dans ce deuxième mode de réalisation de la pièce intermédiaire 8, celle-ci présente alors une forme de berceau accueillant et supportant, avec maintien et renfort, le moyen porte charge 1 par son fond 7, sa face avant 9' et sa face arrière 17'.

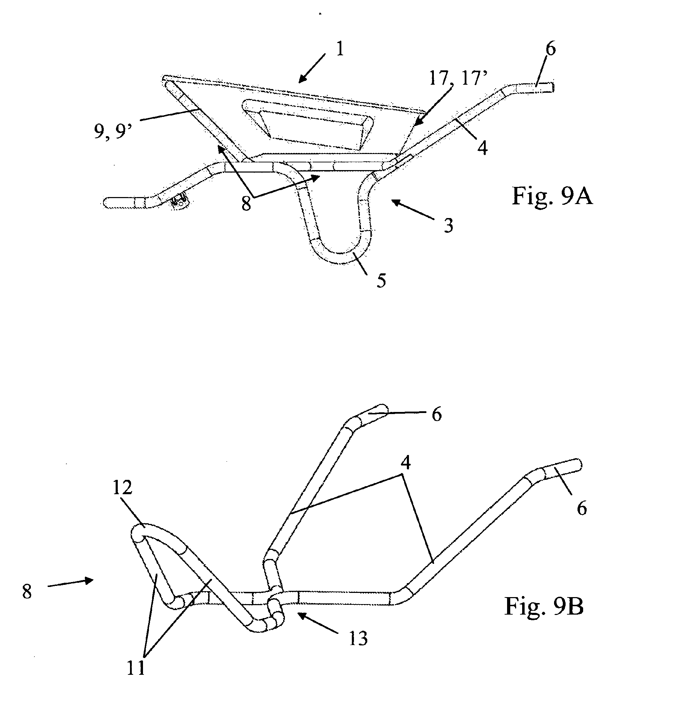

Toujours dans le cas où le moyen porte-charge 1 comprend au moins un fond 7, une face avant 9' et une face arrière 17', la présente invention peut prévoir, dans un troisième mode de réalisation de la pièce intermédiaire 8, représenté sur les figures 9A et 9B, que la seconde partie de cette dernière, le cas échéant sa troisième partie (deuxième mode de réalisation de la pièce intermédiaire), se prolonge, à l'état monté, coté opposé à sa première partie, vers l'arrière de ladite brouette, par une partie de préhension constituant les brancards 4, de préférence avec les poignées 6, de la brouette. On comprendra dans ce cas que les brancards 4 ne sont plus intégrés au châssis 3, comme c'est généralement le cas pour les brouettes actuelles.

Dans ce troisième mode de réalisation, le châssis 3 peut alors soit être fixé sur la pièce intermédiaire 8 de manière classique, par exemple par soudage ou vissage, soit, dans le cas d'un châssis tubulaire, les extrémités libres dudit châssis 3 tubulaire peuvent être emmanchées dans les brancards 4 de ladite pièce intermédiaire 8, lesquels brancards 4 peuvent à cet effet être pourvus chacun d'une ouverture partielle d'emmanchement 4' (figure 9A), de préférence située à leur base à proximité de leur jonction avec la seconde partie de la pièce intermédiaire 8.

D'autre part, selon les modes de réalisation possibles précités de la pièce intermédiaire 8, on comprendra qu'il peut être envisagé de placer les points de fixation selon plusieurs configurations possibles. Par exemple, il peut être prévu, dans une première configuration, de placer un ou plusieurs points de fixation, de préférence deux points de fixation , au niveau de la face avant 9' du moyen porte-charge 1 et un ou plusieurs points de fixation, de préférence deux points de fixation, le cas échéant, sur la face arrière 17' de ce dernier. Dans une deuxième configuration il peut être prévu de placer un ou plusieurs points de fixation, de préférence deux points de fixation, sur le fond 7 et un ou plusieurs points de fixation, de préférence deux points de fixation, sur la face avant 9' et/ou, le cas échéant, sur la face arrière 17' du moyen porte-charge 1.

D'une manière générale, on comprendra que la pièce intermédiaire 8, selon ses mode de réalisation possibles, peut être alors fixée sur le moyen porte charge 1, soit sur le seul fond 7, soit sur la seule face avant 9', soit, le cas échéant, sur la seule face arrière 17', soit sur l'une et l'autre ou l'ensemble de ces dernières.

Ladite pièce intermédiaire 8 permet ainsi un maintien uniforme du moyen porte-charge 1 et renforce celui-ci notablement aux endroits clés subissant des contraintes.

D'autre part, dans le cas préférentiel où la pièce intermédiaire 8 présente une forme tubulaire, celle-ci peut est fixée sur le moyen porte-charge 1 et sur le châssis 3 grâce à des vis auto-taraudeuses dont l'extrémité coupante, tranchante ou perforante est préférentiellement noyée ou insérée dans la partie tubulaire de fixation correspondante de ladite pièce intermédiaire, ce de manière à isoler l'extrémité de chaque vis pour éviter les risques de coupures.

Le châssis 3 peut être standard ou conforme aux châssis représentés aux figures 1 à 9B ou bien encore, il peut être, par exemple, conforme au châssis décrit dans le brevet français n° FR 2 678 882 au nom de la présente demanderesse.

Le moyen porte-charge 1 peut être classique ou conforme au moyen porte-charge décrit dans le brevet français n° FR 2 863 575, datant du 12 décembre 2003, au nom de la présente demanderesse.

Grâce à la présente invention, le procédé de fabrication est simplifié. En effet, le moyen porte-charge 1 est fixé par moins de visseries et il y a moins de perçage, le rendant par conséquent plus résistant et permettant le nettoyage de ce dernier plus facile. De plus, le châssis 3 n'est ni percé ni soudé à des traverses ou jambes, comme c'est le cas dans les brouettes traditionnelles, ce qui lui confère une plus grande solidité, notamment à l'avant et offre de part sa rigidité un confort d'utilisation optimal.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention défini par les revendications annexées.

## Revendications

1. Brouette renforcée comprenant un moyen porte-charge (1), plus particulièrement du type caisse, comportant, au moins, un fond (7) et une paroi avant (9) et étant monté sur un système roulant (2) par l'intermédiaire d'un châssis (3), permettant de supporter le moyen porte-charge (1) avec maintien, au moins un moyen d'appui (5) pour assurer la stabilité de la brouette en situation statique, et des moyens de préhension (4, 6) du type poignées (6) associées à des brancards (4), le moyen porte-charge (1) étant monté et fixé sur ledit châssis essentiellement au moyen d'une pièce intermédiaire (8) constituée par au moins deux parties s'étendant successivement, à l'état monté, suivant l'axe longitudinal de la brouette, à savoir une première partie venant en contact avec la face externe de la paroi avant (9) ou face avant (9') et une seconde partie venant en contact avec la face externe du fond (7), l'une et/ou l'autre desdites première et seconde parties étant fixées, par au moins un point de fixation, sur ledit châssis (3),
la brouette étant **caractérisée en ce que** ladite pièce intermédiaire est une pièce rigide de maintien, de support et de renfort réalisée en une seule pièce à partir d'un tube çigide, ou autre élément allongé et rigide, cintré en plusieurs points, en contact, d'une part, avec la face avant (9') suivant une ligne de contact globalement en forme d'arceau, de U ou de V, et d'autre part, avec la face externe du fond (7), en étant fixé sur ce dernier par au moins un point de fixation, suivant deux lignes de contacts, formant globalement un X, épousant sensiblement les diagonales de la face externe dudit fond (7), ladite pièce intermédiaire (8) comportant alors au moins deux plans de ligne(s) de contact, à savoir un premier plan formant la première partie venant en contact avec la face avant (9') et un second plan formant la seconde partie venant en contact avec la face externe du fond (7) et **en ce que** lesdits premier et second plans sont inclinés l'un par rapport à l'autre d'un angle (α) sensiblement égal à l'angle d'inclinaison, entre la paroi avant (9) et le fond (7).

2. Brouette, selon la revendication 1, **caractérisée en ce que** la pièce intermédiaire (8) tubulaire est cintrée symétriquement par rapport à un axe médian longitudinal (X-X') et **en ce que**, d'une part, le premier plan est un plan de cintrage comprenant deux portions droites (11), sensiblement parallèles ou inclinées l'une par rapport à l'autre, reliées entre elles à l'une de leurs extrémités par une portion courbe (12) et, d'autre part, le second plan est un plan de cintrage comprenant deux portions cintrées (13) prolongeant chacune l'une desdites portions droites (11) du premier plan et comportant chacune une succession de cintrages, symétriquement l'une par rapport à l'autre portion, à savoir un cintrage définissant l'angle d'inclinaison (α) entre le second plan de cintrage et le premier plan de cintrage, et deux cintrages ayant pour effet que les deux portions cintrées (13) symétriques forment ensemble le X et se rejoignent au centre de ce dernier, de préférence en étant fixées l'une avec l'autre.

3. Brouette, selon l'une quelconque des revendications 1 à 2, **caractérisé en ce que** la seconde partie de la pièce intermédiaire (8) tubulaire se termine par deux extrémités libres (10) tubulaires et **en ce que** ces dernières sont écrasées ou aplaties et, préférentiellement, biseautées, pour permettre l'accostage avec le châssis (3).

4. Brouette, selon l'une quelconque des revendications 1 à 3, **caractérisée en ce que** le moyen porte-charge (1) est du type bac ou caisse comprenant au moins un fond (7), une face avant (9') et une face arrière (17') et **en ce que** la seconde partie de la pièce intermédiaire (8) se prolonge, côté opposé à la première partie de la pièce intermédiaire (8), vers l'arrière de ladite brouette, par une troisième partie venant en contact avec ladite face arrière (17'), le cas échéant en étant fixée sur cette dernière par au moins un point de fixation, ladite troisième partie formant, le cas échéant, un troisième plan de cintrage incliné par rapport au second plan de cintrage d'un angle sensiblement identique à l'angle entre le fond (7) et ladite face arrière (17').

5. Brouette, selon l'une quelconque des revendications 1 à 4, **caractérisée en ce que** la seconde partie de la pièce intermédiaire (8), le cas échéant la troisième partie de la pièce intermédiaire (8), se prolonge, à l'état monté, vers l'arrière de ladite brouette par une partie de préhension constituant les poignées (6) et les brancards (4) de la brouette.

6. Brouette selon l'une quelconques des revendications 1 à 5, **caractérisée en ce que** le moyen porte-charge (1) est du type bac ou caisse comprenant, au moins, un fond (7), une face avant (9') et une face arrière (17') et **en ce que** cette dernière est fixée directement sur le châssis (3) qui comporte à cet effet une partie de châssis (3') venant en contact avec ladite face arrière (17'), le cas échéant en étant fixée sur cette dernière par au moins un point de fixation.

7. Brouette, selon l'une quelconque des revendications 1 à 6 **caractérisée en ce que** la pièce intermédiaire (8) tubulaire est fixée sur le moyen porte-charge (1) et sur le châssis (3) grâce à des vis auto-taraudeuses dont l'extrémité coupante, tranchante ou perforante de chaque vis est noyée ou insérée dans la partie tubulaire de fixation correspondante de ladite pièce intermédiaire.

8. Brouette, selon l'une quelconque des revendications 1 à 7, **caractérisée en ce que** le châssis (3) consiste en un châssis (3) tubulaire réalisé à partir d'un élément tubulaire rigide cintré en plusieurs points, ledit élément tubulaire étant réalisé soit en une seule pièce à partir d'un tube rigide, ou autre élément allongé et rigide plein ou creux, soit à partir d'un assemblage de plusieurs tubes rigides, ou autres éléments allongés et rigides pleins ou creux, cintrés ou droits.

## Patentansprüche

1. Verstärkte Schubkarre umfassend ein insbesondere kastenartiges Lastaufnahmemittel (1), mit wenigstens einem Boden (7) und einer Vorderwand (9) wobei dieses Mittel auf einem Rollsystem (2) durch ein Fahrgestell (3) gelagert ist, zur Stütze und Halterung des Lastaufnahmemittels (1), wenigstens ein Lagermittel (5) zur Stabilität der Schubkarre in statischem Zustand, und Greifmittel (4, 6) in der Art von Tragbahren (4) zugeordneten Griffen (6), wobei das Lastaufnahmemittel (1) an diesem Fahrgestell im Wesentlichen durch ein Zwischenstück (8) gelagert und befestigt ist, bestehend aus mindestens zwei Teilen, die sich in montiertem Zustand sukzessiv nach der Längsachse der Schubkarre erstrecken, wobei nämlich ein erster Teil in Kontakt mit der Außenfläche der Vorderwand (9) oder Vorderseite (9') steht und ein zweiter Teil in Kontakt mit der Außenfläche des Bodens (7) steht, wobei der eine und/oder andere dieser ersten und zweiten Teile an diesem Fahrgestell (3) durch mindestens einen Befestigungspunkt befestigt sind, wobei die Schubkarre **dadurch gekennzeichnet ist, dass** dieses Zwischenstück als ein steifes einstückiges Teil zur Halterung, Stütze und Verstärkung gestaltet ist, bestehend aus einem steifen Rohr oder einem verlängerten und steifen an einigen Stellen gekrümmten Element, das in Kontakt ist einerseits mit der Vorderseite (9') entlang einer insgesamt bogen-, U- oder V-förmigen Kontaktlinie und andererseits mit der Außenfläche des Bodens (7), wobei dieses Element an diesem Boden durch mindestens einen Befestigungspunkt entlang zweier Kontaktlinien befestigt ist, die insgesamt X-förmig sind und sich im wesentlichen an die Diagonalen der Außenfläche dieses Bodens (7) anpassen, wobei dieses Zwischenstück (8) dann mindestens zwei Kontaktlinienebenen umfasst, nämlich eine erste Ebene, die den ersten Teil in Kontakt mit der Außenfläche der Vorderseite (9') bildet und eine zweite Ebene, die den zweiten Teil in Kontakt mit der Außenfläche des Bodens (7) bildet, and dass diese erste und zweite Ebene um einen Winkel (a) zueinander geneigt sind, der dem Neigungswinkel zwischen der Vorderwand (9) und dem Boden (7) im wesentlichen entspricht.

2. Schubkarre nach Anspruch 1, **dadurch gekennzeichnet, dass** das rohrförmige Zwischenstück (8) gegenüber einer Längsmittelachse (X-X') symmetrisch gekrümmt ist und dass einerseits die erste Ebene eine Krümmungsebene ist, umfassend zwei gerade Teilabschnitte (11), die mehr oder weniger parallel angeordnet oder relativ zueinander geneigt, an einem ihrer Enden durch einen gebogenen Teilabschnitt (12) miteinander verbunden sind und andererseits die zweite Ebene eine Krümmungsebene ist, umfassend zwei gekrümmte Teilabschnitte (13), die jeweils einen dieser geraden Teilabschnitte der ersten Ebene (11) verlängern und jeweils hintereinanderfolgende Krümmungen symmetrisch relativ zueinander enthält, d.h. eine Krümmung, die den Neigungswinkel (a) zwischen der zweiten Krümmungsebene und der ersten Krümmungsebene bestimmt, und zwei Krümmungen mit der Wirkung, dass beide symmetrisch gekrümmten Teilabschnitte (13) das X miteinander ausbilden und sich mittig in diesem zusammentreffen, wobei sie bevorzugt miteinander befestigt sind.

3. Schubkarre nach einem der Ansprüche 1 bis 2, **dadurch gekennzeichnet, dass** der zweite Teil des rohrförmigen Zwischenstücks (8) mit zwei rohrförmigen freien Enden (10) endet und dass diese zusammengepresst oder abgeflacht sind und auch zum Andocken mit dem Fahrgestell (3) vorzugsweise abgeschrägt sind.

4. Schubkarre nach einem der Ansprüche 1 bis 3, **dadurch gekennzeichnet, dass** das Lastaufnahmemittel (1) wannen- oder kistenartig ist, umfassend wenigstens einen Boden (7), eine Vorderseite (9') und eine Rückseite (17') und dass sich der zweite Teil des Zwischenstücks (8) an der dem ersten Teil des Zwischenstücks (8) entgegengesetzten Seite verlängert, nach dem hinteren Teil dieser Schubkarre, nämlich durch einen dritten Teilabschnitt, der mit dieser Rückseite (17') in Kontakt steht, wobei diese Schubkarre gegebenenfalls an dieser Seite durch mindestens einen Befestigungspunkt befestigt ist, wobei dieser dritte Teil gegebenenfalls eine dritte Krümmungsebene bildet, die gegenüber der zweiten Krümmungsebene um einen Winkel geneigt ist, der dem Winkel zwischen dem Boden (7) und dieser Rückseite (17') im wesentlichen identisch ist.

5. Schubkarre nach einem der Ansprüche 1 bis 4, **dadurch gekennzeichnet, dass** sich der zweite Teilabschnitt des Zwischenstücks (8), gegebenenfalls der dritte Teilabschnitt des Zwischenstücks (8), in montiertem Zustand nach dem hinteren Teil dieser Schubkarre durch einen Greifteil verlängert, der die Griffe (6) und die Tragbahren (4) der Schubkarre bildet.

6. Schubkarre nach einem der Ansprüche 1 bis 5, **dadurch gekennzeichnet, dass** das Lastaufnahmemittel (1) wannen- oder kistenartig ist, umfassend wenigstens einen Boden (7), eine Vorderseite (9') und eine Rückseite (17') und dass diese Seite unmittelbar am Fahrgestell (3) befestigt ist, das zu diesem Zweck den Teilabschnitt eines Fahrgestells (3') enthält, das in Kontakt mit dieser Rückseite (17') steht, wobei diese gegebenenfalls an dieser Seite durch mindestens einen Befestigungspunkt befestigt ist.

7. Schubkarre nach einem der Ansprüche 1 bis 6, **dadurch gekennzeichnet, dass** das rohrförmige Zwischenstück (8) am Lastaufnahmemittel (1) und am Fahrgestell (3) dank gewindeschneidenden Schrauben befestigt ist, wobei das schneidende, scharfe oder durchbohrende Ende jeder Schraube im entsprechenden rohrförmigen Teilabschnitt dieses Zwischenstücks eingebettet oder eingeführt ist.

8. Schubkarre nach einem der Ansprüche 1 bis 7, **dadurch gekennzeichnet, dass** das Fahrgestell (3) aus einem rohrförmigen Fahrgestell (3) besteht, nämlich aus einem an einigen Stellen gekrümmten steifen rohrförmigen Element, wobei dieses rohrförmige Element entweder aus einem steifen Rohr oder einem anderen verlängerten und steifen, vollen oder hohlen Element einstückig gebildet ist, oder aus einem Zusammenbau von mehreren steifen Rohren oder anderen verlängerten und steifen, vollen oder hohlen, gekrümmten oder geraden Elementen.

## Claims

1. Reinforced wheelbarrow, comprising a load carrying unit (1), in particular in the form of a crate, comprising at least a bottom part (7) and a front wall (9) and being mounted on a rolling system (2) by means of a base frame (3) for supporting the load carrying unit (1) with retaining means, at least one support means (5) for ensuring the stability of the wheelbarrow in a stationary position, and gripping means (4, 6) in the form of handles (6) connected to shafts (4),
the load carrying unit (1) being mounted and fixed onto said base frame essentially by an intermediate part (8) formed by at least two sections extending in succession in the mounted state along the longitudinal axis of the wheelbarrow, namely a first part coming into contact with the external face of the front wall (9) or front face (9') and a second part coming into contact with the external face of the bottom part (7), one and/or other of said first and second parts being fixed in at least one fixing point onto said frame part (3), the wheel barrow being **characterised in that** said intermediate part is a rigid holding, support and reinforcing part made in one piece from a rigid tube, or other elongated and rigid element, bent in several places, in contact on the one hand with the front face (9') following a contact line generally in the form of an arc, U or V, and on the other hand with the external face of the bottom part (7), by being fixed onto the latter in at least one fixing point according to two contact lines forming an overall X shape, essentially matching up the diagonals of the external face of said bottom part (7), said intermediate part (8) then comprising at least two planes of lines of contact, namely a first plane forming the first part coming into contact with the front face (9') and a second plane forming the second part coming into contact with the external face of the bottom part (7) and **in that** the said first and second planes are inclined in relation to one another at an angle (α) substantially equal to the angle of inclination between the front wall (9) and the base (7).

2. Wheelbarrow according to claim 1, **characterised in that** the intermediate tubular part (8) is bent symmetrically in relation to a longitudinal median axis (X-X') and **in that** on the one hand the first plane is a bending plane comprising two straight sections (11), substantially parallel or inclined in relation to one another, connected to one another at one end by a curved portion (12) and on the other hand the second plane is a bending plane comprising two bent portions (13) each extending one of the said straight sections (11) of the first plane and each comprising a succession of bends symmetrical to the other portion namely a bend defining the angle of inclination (α) between the second bending plane and the first bending plane and two bends having the effect that the two symmetrical bent portions (13) together form the X and meet at the centre of the latter and are preferably fixed to one another.

3. Wheelbarrow according to any one of claims 1 to 2, **characterised in that** the second part of the intermediate tubular part (8) is terminated by two free tubular ends (10) and **in that** the latter are compressed or flattened and preferably bevelled to enable them to be fitted alongside the base frame (3).

4. Wheelbarrow according to any one of claims 1 to 3, **characterised in that** the load carrying unit (1) is in the form of a box or crate comprising at least one bottom part (7), a front face (9') and a rear face (17') and **in that** the second part of the intermediate part (8) extends, on the side opposite the first part of the intermediate part (8) towards the rear of said wheelbarrow, with a third part coming into contact with the said rear face (17'), possibly by being fixed to the latter in at least one fixing point, said third part forming if necessary a third bending plane inclined in relation to the second bending plane at an angle substantially identical to the angle between the bottom part (7) and said rear face (17').

5. Wheelbarrow according to any one of claims 1 to 4, **characterised in that** the second part of the intermediate part (8), possibly the third part of the intermediate part (8), extends in the assembled state to the rear of said wheelbarrow with a gripping part forming the handles (6) and shafts (4) of the wheelbarrow.

6. Wheelbarrow according to any one of claims 1 to 5, **characterised in that** the load carrying unit (1) is in the form of a box or crate comprising at least a bottom part (7), a front face (9') and a rear face (17') and **in that** the latter is fixed directly onto the frame part (3) which comprises for this purpose a part of the frame (3') which comes into contact with said rear face (17'), possibly being fixed onto the latter in at least one fixing point.

7. Wheelbarrow according to any one of claims 1 to 6, **characterised in that** the tubular intermediate part (8) is fixed onto the load carrying unit (1) and onto the frame part (3) by means of self-tapping screws, the cutting or perforating end of each screw being sunk or inserted into the corresponding tubular fixing part of the said intermediate part.

8. Wheelbarrow according to any one of claims 1 to 7, **characterised in that** the frame part (3) consists of a tubular frame part (3) formed by a rigid tubular element which is bent in several places, said tubular element being either in the form of a single piece of rigid tube or another solid or hollow elongated and rigid element, or in the form of an assembly of several rigid tubes or other elongated and rigid, solid or hollow, bent or straight elements.
